# EUROPÄISCHE PATENTSCHRIFT

(11) **EP 3 176 484 B1**
(45) Veröffentlichungstag und Bekanntmachung des Hinweises auf die Patenterteilung: **12.06.2019**
(21) Anmeldenummer: 16201642.2
(22) Anmeldetag: 01.12.2016
(51) Int. Cl.: F16L 23/028, E03B 7/07, E03B 7/09, F16L 23/032, F16L 39/00

(54) **WASSERBEHANDLUNGSVORRICHTUNG**
WATER TREATMENT DEVICE
DISPOSITIF DE TRAITEMENT DE L'EAU

(30) Priorität: 03.12.2015 DE 202015106581 U
(43) Veröffentlichungstag der Anmeldung: 07.06.2017
(73) Patentinhaber: Grünbeck Wasseraufbereitung GmbH, 89420 Höchstädt a.d. Donau (DE)
(72) Erfinder: Fiess, Helmut, 71576 Burgstetten (DE); Harlacher, Martin, 89435 Finningen Mörslingen (DE); Rauch, Jürgen, 86637 Wertingen (DE); Finger, Markus, 89420 Höchstädt/Donau (DE)
(74) Vertreter: Charrier Rapp & Liebau

(56) Entgegenhaltungen:
- EP-A1- 1 712 826
- DE-A1- 4 303 123
- DE-A1- 19 529 189
- US-A- 4 023 836

## Beschreibung

Die Erfindung betrifft eine Wasserbehandlungsvorrichtung zur Installation in einer Wasserleitung nach dem Oberbegriff des Anspruchs 1.

Eine Wasserbehandlungsvorrichtung ist aus der EP 2 251 495 A2 bekannt. Die Wasserbehandlungsvorrichtung umfasst ein Wasserbehandlungsgerät zur Behandlung von Wasser und ein Anschlussstück zur Verbindung der Wasserbehandlungsvorrichtung mit einer Wasserleitung. Um das Wasserbehandlungsgerät dichtend mit dem Anschlussstück zu verbinden, ist zwischen dem Wasserbehandlungsgerät und dem Anschlussstück eine Flanschverbindung mit einem ersten Flansch an dem Anschlussstück und einem dazu korrespondierenden zweiten Flansch an dem Wasserbehandlungsgerät vorgesehen. Bei der Montage wird dabei zuerst das Anschlussstück mittels entsprechender rohrleitungsseitiger Enden an einen Zulauf und einen Rücklauf einer Rohrleitung einer Hausinstallation angeschlossen. Anschließend kann das Wasserbehandlungsgerät mittels einer zentralen Schraube, welche durch das Wasserbehandlungsgerät mittig hindurchragt, mit dem Anschlussstück kraftschlüssig verbunden werden. Das Wasserbehandlungsgerät ist rotationssymmetrisch aufgebaut, dass heißt dass ein inneres Rohr konzentrisch innerhalb eines äußeren Rohrs angeordnet ist, so dass im inneren Rohr das zu behandelnde Wasser in das Wasserbehandlungsgerät fließen kann und durch den Ringspalt zwischen dem inneren Rohr und dem äußeren Rohr aus dem Wasserbehandlungsgerät nach der Behandlung austreten kann. Die Strömungsrichtung des Wassers kann natürlich auch anders herum gewählt werden. Durch die rotationssymmetrische Ausbildung der miteinander korrespondierenden Flansche kann das Wasserbehandlungsgerät in jeder Winkelstellung relativ zu dem Anschlussstück an dem Anschlussstück montiert werden, so dass unabhängig von dem durch die Hausinstallation vorgegebenen Rohrleitungsverlauf das Wasserbehandlungsgerät in einer gewünschten Lage, beispielsweise vertikal montiert werden kann. Dies ermöglicht eine besonders flexible Montage des Wasserbehandlungsgeräts an dem Anschlussstück. Dabei besteht jedoch die Gefahr, dass sich die Schraubverbindung mit der Zeit löst, wodurch die Flanschverbindung undicht werden würde. Die Schraubverbindung kann sich zudem auch lösen, wenn nach der Montage mittels der Schraube das Wasserbehandlungsgerät gegenüber dem Anschlussstück verdreht wird und sich dabei die Schraube mitdreht. Zudem kann eine derartige Ausgestaltung nicht vormontiert werden, da die Montage erst vor Ort gemäß der Flussrichtung der zu installierenden Rohrleitung erfolgen muss, was ein erhöhtes Fehlerrisiko, ein größeres Verschmutzungsrisiko und einen größeren Zeitaufwand zur Folge hat. Da der exakte Zusammenbau des Wasserbehandlungsgeräts mit dem Anschlussstück jedoch entscheidend ist für die Dichtwirkung der Flanschverbindung, hätte eine Vormontage deutliche Vorteile.

Aus der DE 43 03 123 A1 und der DE 195 29 189 A1 sind zudem Wasserbehandlungsvorrichtungen mit der vorbeschriebenen Flanschverbindung bekannt, bei welchen Befestigungsschrauben zur gegenseitigen Fixierung der Flansche vorgesehen sind. Weitere Ausführungsformen von Flanschverbindungen sind zudem der US 4,023,836 und der EP 1 712 826 A1 zu entnehmen.

Aufgabe der Erfindung ist es deshalb, eine Wasserbehandlungsvorrichtung zu schaffen, welche konfektionierbar, also vormontierbar, ist, eine schnelle und sichere Montage ermöglicht und dennoch eine flexible Ausrichtung des Wasserbehandlungsgeräts vor Ort ermöglicht.

Diese Aufgabe wird durch eine Wasserbehandlungsvorrichtung mit den Merkmalen des Anspruchs 1 gelöst. Vorteilhafte Ausgestaltungen der Erfindung sind in den Unteransprüchen angegeben.

Die Wasserbehandlungsvorrichtung zeichnet sich dadurch aus, dass der zweite Flansch an dem Wasserbehandlungsgerät den ersten Flansch an dem Anschlussstück haltend hintergreift. Diese formschlüssige Flanschverbindung kann einfach vormontiert werden und ermöglicht eine exakte Vorspannung der Dichtungen. Zudem wird hierdurch auch eine freie Verdrehung des Wasserbehandlungsgeräts gegenüber dem Anschlussstück ermöglicht, wobei sich die Vorspannung der Dichtungen nicht bei einer Verdrehung lösen kann.

Zudem ist erfindungsgemäß in einem Ringspalt zwischen einander gegenüberliegenden ebenen Ringflächen des ersten Flansches und des zweiten Flansches eine Ringfeder zum Erreichen einer reproduzierbaren Winkellage des Wasserfilters zu dem Anschlussstück angeordnet. Die Ringfeder kann mindestens eine entsprechende axial oder radial vorstehende Rastnase aufweisen. Diese Radial- bzw. Axialfeder kann zwischen den einander hintergreifenden Flanschen angeordnet sein und mit der mindestens einen vorstehenden Rastnase mit radial bzw. axial ausgerichteten Rastnuten lösbar haltend zusammenwirken.

Ein entsprechendes formschlüssiges Hintergreifen bedeutet, dass der zweite Flansch den ersten Flansch zumindest teilweise hintergreift, also dass der zweite Flansch mit mindestens einem entsprechenden Haltesegment in Kontakt mit einer von dem zweiten Flansch abgeneigten Haltefläche bzw. Rückseite des ersten Flansches steht, so dass der erste Flansch an dem zweiten Flansch gehalten wird. Dabei hintergreift immer auch der erste Flansch den zweiten Flansch, so dass de facto ein gegenseitiges Hintergreifen vorliegt. Um dieser konstruktiven Freiheit Rechnung zu tragen, wird im Folgenden die Bezeichnung des korrespondierenden Flansches verwendet, welcher einem Gegenflansch entspricht. Der zu dem ersten Flansch korrespondierender Flansch ist damit der zweite Flansch und andersrum.

In einer vorteilhaften Ausführungsform kann der erste Flansch oder der zweite Flansch mindestens ein Haltesegment aufweisen, welches einen ebenen Ringsteg an dem korrespondierenden Flansch zumindest abschnittsweise haltend hintergreift. So kann beispielsweise der erste Flansch an dem Anschlussstück einen Ringsteg aufweisen, welcher von einem an dem zweiten Flansch an dem Wasserbehandlungsgerät ausgebildeten Haltesegment formschlüssig hintergriffen wird. Hierdurch wird der Abstand zwischen dem Anschlussstück und dem Wasserbehandlungsgerät im Flanschbereich genau festgelegt und kann sich auch aufgrund des Ringstegs anders als bei einer Gewindeverbindung bei einer gegenseitigen Verdrehung von Anschlussstück zu Wasserbehandlungsgerät nicht verändern. Als erfindungsgemäßer Ringsteg kann beispielweise der Rand einer Ringnut ausgebildet sein, in welcher mehrere als Kugeln ausgebildete Haltesegmente angeordnet sind. Diese Kugeln können zudem in einer der Ringnut gegenüberliegenden weiteren Ringnut in dem korrespondierenden Flansch abrollen, so dass eine besonders reibungsarme, formschlüssig hintergreifende Flanschverbindung gebildet wird. Es ist jedoch auch möglich, anstelle der Kugeln einen Draht bevorzugt aus Kunststoff in die Ringnut einzuziehen, welcher anstelle der Kugeln für den haltenden Hintergriff sorgt. Zudem kann jedes Haltesegment auch als ebene Platte ausgebildet sein, welche flächig an der Rückseite eines Ringstegs an dem korrespondierenden Flansch anliegt und somit eine hintergreifende Flanschverbindung gebildet wird. Des Weiteren können auch Klammern oder Bolzen vorgesehen sein, welche in Umfangsrichtung zumindest abschnittsweise den korrespondierenden Flansch hintergreifen. Bevorzugt kann jedes Haltesegment durch mindestens ein Befestigungselement an dem ersten Flansch oder dem zweiten Flansch lösbar befestigt sein. Als Befestigungselemente können beispielsweise Schrauben vorgesehen sein, wodurch auch eine schnelle Demontage beispielsweise zu Wartungszwecken ermöglicht wird.

In einem Beispiel, das zur Erfindung nicht gehört, kann anstelle der Ringfeder an einem oder mehreren der Haltesegmente mindestens ein Vorsprung vorgesehen sein, welcher zum elastisch rastenden Eingriff in mindestens eine am korrespondierenden Flansch angeordnete Rastnut ausgebildet ist. Durch diesen rastenden Eingriff des Vorsprungs in die mindestens eine Rastnut kann eine bestimmte Winkelposition zwischen dem Haltesegment und der Rastnut und damit dem Wasserbehandlungsgerät und dem Anschlussstück reproduzierbar und besonders einfach eingestellt werden. Die elastische Vorspannung zwischen dem Vorsprung und der Rastnut kann dabei so ausgebildet sein, dass eine manuelle Verstellung der Winkelposition des Wasserbehandlungsgeräts gegenüber dem Anschlussstück einfach möglich ist.

Dabei kann besonders vorteilhaft jeder Vorsprung von jedem Haltesegment radial nach innen vorstehen und in Umfangsrichtung um den korrespondierenden Flansch herum können mehrere korrespondierende Rastnuten radial nach außen gerichtet angeordnet sein. Hierdurch ergibt sich eine besonders einfach zu fertigende und sichere Rastverbindung. Es ist jedoch auch möglich, dass alternativ oder zusätzlich Vorsprünge vorgesehen sind, welche von mindestens einem Haltesegment radial nach außen vorstehen, wobei dann in Umfangsrichtung um den korrespondierenden Flansch herum mehrere korrespondierende Rastnuten radial nach innen gerichtet angeordnet sind.

Vorteilhaft können die Rastnuten gleichmäßig in Umfangsrichtung um den korrespondierenden Flansch angeordnet sein, insbesondere in einer wählbaren Winkelteilung von zum Beispiel 15°. Hierdurch werden eine freie gegenseitige Verdrehung um 360° und eine sehr feine Einstellbarkeit der relativen Winkellage von Wasserbehandlungsgerät zu dem Anschlussstück gewährleistet.

Ebenso vorteilhaft kann jedes Haltesegment an gegenüberliegenden Enden eine Aussparung zur Aufnahme eines Befestigungselements aufweisen. Hierdurch kann ein Befestigungselement zwei aneinander angrenzende Enden eines Haltesegments gleichzeitig fixieren, wodurch die Anzahl an Befestigungselementen reduziert und die Montage vereinfacht wird. Besonders vorteilhaft können sich die Haltesegmente im Bereich der Enden überlappen. So können beispielsweise die Enden als Ringscheiben ausgebildet sein, wobei zwei derartiger Ringscheiben von zwei angrenzenden Haltelementen einander überlappen und mittels eines gemeinsamen Befestigungselements in Form einer Schraube, welche durch die Ringscheiben hindurchragt, fixiert werden. Die Haltesegmente können jedoch auch nicht einander überlappend angeordnet sein, insbesondere können die Haltesegmente in Umfangsrichtung auch voneinander beabstandet angeordnet und beispielsweise nur zwei Haltesegmente vorgesehen sein.

Besonders günstig kann es sein, wenn jedes Haltesegment eben ausgebildet ist und das erste Ende jedes Haltesegments gegenüber dem Rest des Haltesegments und insbesondere dem zweiten Ende um die Dicke des zweiten Endes rechtwinklig zur ebenen Erstreckung des Haltesegments versetzt ist. Hierdurch wird gewährleistet, dass die Haltesegmente flächig an dem Ringsteg des korrespondierenden Flansches anliegen und somit eine gleichmäßige Anpressung der Dichtungen in der Flanschverbindung möglich ist. Ebenso ist es auch möglich, dass die Haltesegmente eben ausgebildet sind und die Dicke jedes Haltesegments am ersten und zweiten Ende von entgegengesetzten Seiten reduziert ist, so dass sich die überlappenden Enden einander zur ursprünglichen Dicke des Haltesegments ergänzen.

In einer vorteilhaften Weiterbildung kann an dem ersten Flansch oder dem zweiten Flansch eine Arretiervorrichtung angeordnet sein, welche zum lösbaren Eingriff mit in Umfangsrichtung verteilt angeordnete Arretiernuten an dem korrespondierenden Flansch ausgebildet ist. Hierdurch kann die Winkellage des Wasserbehandlungsgeräts relativ zu dem Anschlussstück fixiert werden, so dass eine anschließende unbeabsichtigte manuelle Verstellung zuverlässig verhindert wird.

Vorteilhaft kann die Arretiervorrichtung zwischen einer Lösestellung, in welcher die Arretiervorrichtung nicht in Eingriff mit den Arretiernuten steht, und einer Arretierstellung, in welcher die Arretiervorrichtung mit mindestens einer der Arretiernuten in Eingriff steht, verschiebbar sein. Hierdurch wird eine einfach zu bedienende Sicherung der Winkellage des Wasserbehandlungsgeräts relativ zu dem Anschlussstück ermöglicht.

Des Weiteren kann es günstig sein, dass zwischen einander gegenüberliegenden ebenen Ringflächen des ersten Flansches und des zweiten Flansches mindestens eine Dichtung angeordnet ist. Durch die Haltesegmente kann die Vorspannung auf die Dichtung bei der Vormontage des Wasserbehandlungsgeräts mit dem Anschlussstück genau eingestellt werden und bleibt auch bei einer Veränderung der Winkellage zwischen dem Wasserbehandlungsgerät und dem Anschlussstück unverändert. Auch wird durch das formschlüssige Hintergreifen der Flanschverbindung ein unbeabsichtigtes Lösen der Vorspannung zuverlässig verhindert.

Weitere Besonderheiten und Vorzüge der Erfindung ergeben sich aus der folgenden Beschreibung von Beispielen anhand der Zeichnungen. Es zeigen:
- **Fig. 1**: eine Darstellung der Wasserbehandlungsvorrichtung in der Vorderansicht;
- **Fig. 2**: eine Darstellung der Wasserbehandlungsvorrichtung von Figur 1 in der Seitenansicht;
- **Fig. 3**: eine Darstellung der Wasserbehandlungsvorrichtung von Figur 1 in der Draufsicht;
- **Fig. 4**: eine Schnittdarstellung der Wasserbehandlungsvorrichtung entlang der Linie E-E von Figur 3;
- **Fig. 5**: eine Detailansicht des Bereichs X von Figur 4 mit einem Haltesegment;
- **Fig. 6**: eine isolierte Darstellung des Haltelements aus Figur 5;
- **Fig. 7**: eine Schnittdarstellung der Wasserbehandlungsvorrichtung entlang der Linie D-D von Figur 2;
- **Fig. 8**: eine Detailansicht des Bereichs Y von Figur 7;
- **Fig. 9**: eine Schnittdarstellung der Wasserbehandlungsvorrichtung entlang der Linie F-F von Figur 1;
- **Fig. 10**: eine Detailansicht des Bereichs V von Figur 9;
- **Fig. 11**: einen Teilschnitt entlang der Linie B-B von Figur 3;
- **Fig. 12**: eine Detailsicht des Bereichs Z von Figur 11;
- **Fig. 13**: eine Darstellung exemplarischer Winkellagen der Wasserbehandlungsvorrichtung bei horizontalen Anschlussleitungen und
- **Fig. 14**: eine Darstellung exemplarischer Winkellagen der Wasserbehandlungsvorrichtung bei vertikalen Anschlussleitungen.

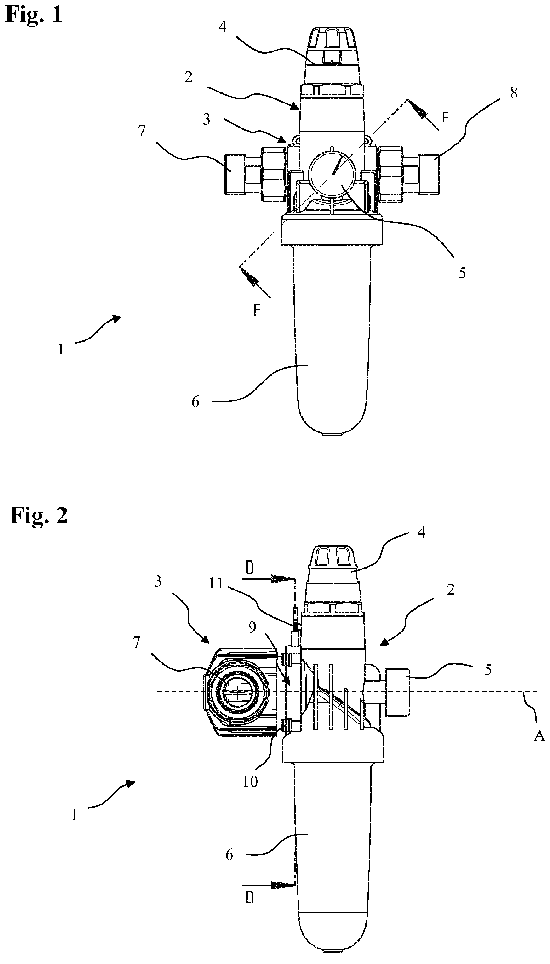

In Figur 1 ist eine Wasserbehandlungsvorrichtung 1 in einer Vorderansicht gezeigt. Diese umfasst ein Wasserbehandlungsgerät in Form eines Wasserfilters 2 und ein hinter dem Wasserfilter 2 angeordnetes Anschlussstück 3. Der Wasserfilter 2 hat zudem die Funktion eines Druckminderers, bei dem über einen Einstellknopf 4 der gewünschte Wasserdruck eingestellt und über ein Manometer 5 angezeigt wird. An der Unterseite des Wasserfilters 2 ist eine Filterpatrone 6 mittels einer Schraubverbindung befestigt und kann entsprechend einfach getauscht werden. Das Wasserbehandlungsgerät kann zudem auch eine Impfstelle mit einer Dosiervorrichtung und/oder eine Enthärtungsanlage und/oder einen Wasserzähler umfassen.

Das Anschlussstück 3 weist einen ersten Anschluss 7 für eine Zuführung von Wasser zu der Wasserbehandlungsvorrichtung 1 und einen zweiten Anschluss 8 für eine Abführung von Wasser von der Wasserbehandlungsvorrichtung 1 auf. Die Wasserbehandlungsvorrichtung 1 ist dabei mit einer nicht dargestellten Rohrleitung einer Hausinstallation verbunden. Diese Rohrleitung, welche in diesem Beispiel horizontal verläuft, ist an der Stelle der Wasserbehandlungsvorrichtung 1 unterbrochen und derjenige Rohrleitungsteil, aus welchem das Wasser fließt, wird mit dem ersten Anschluss 7 und derjenige Teil, in welchem das Wasser abfließen soll, mit dem zweiten Anschluss 8 verbunden. Das Wasser fließt folglich bei dem in Figur 1 gezeigten Beispiel von links über den ersten Anschluss 7 in die Wasserbehandlungsvorrichtung 1, wird im Inneren der Wasserbehandlungsvorrichtung 1 durch einen Filter geleitet und damit filtriert und anschließend über den zweiten Anschluss 8 wieder in die Rohrleitung der Hausinstallation geführt.

In Figur 2 ist die Wasserbehandlungsvorrichtung 1 von Figur 1 in einer Seitenansicht gezeigt. Wie dort zu erkennen ist, ist der Wasserfilter 2 mit dem Anschlussstück 3 über eine Flanschverbindung 9 verbunden. Die Flanschverbindung 9 ist mittels Schrauben 10 derart gesichert, dass der Wasserfilter 2 und das Anschlussstück 3 dichtend miteinander verbunden sind, jedoch der Wasserfilter 2 gegenüber dem Anschlussstück 3 um eine in Figur 2 schematisch dargestellte horizontale Drehachse A verdreht werden kann. Um auch dieses gegenseitige Verdrehen zu sperren, ist eine Arretiervorrichtung 11 vorgesehen, welche im Folgenden noch näher erläutert wird.

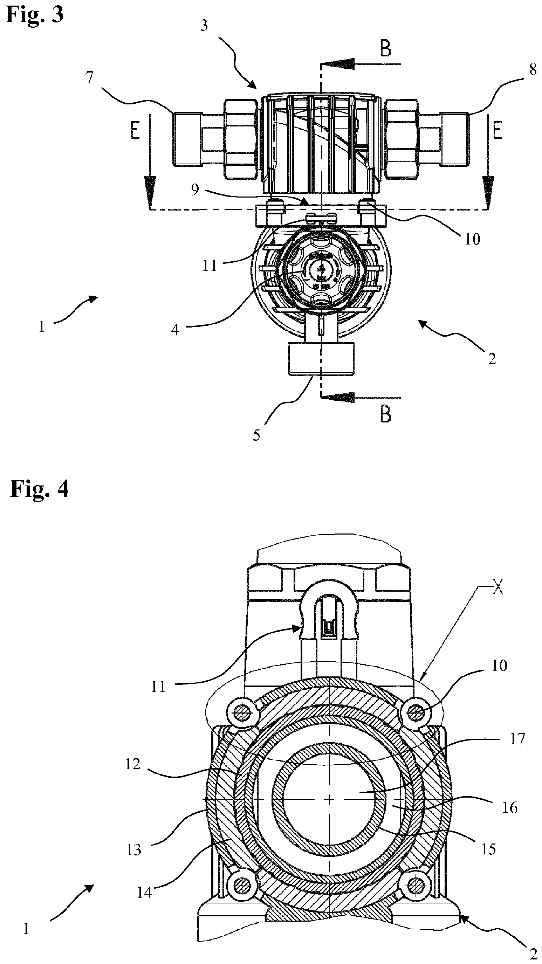

In Figur 3 ist die Wasserbehandlungsvorrichtung 1 in einer Draufsicht gezeigt. Wie dort zu erkennen ist, wird das Wasser, welches über den ersten Anschluss 7 dem Anschlussstück 3 zugeführt wird, um 90° umgelenkt und zu der Flanschverbindung 9 geleitet. An der Flanschverbindung 9 wird das Wasser in den Wasserfilter 2 überführt, in welchem das Wasser dann gefiltert wird. Das gefilterte Wasser wird anschließend über separate Leitungen in dem Wasserfilter 2 über die Flanschverbindung 9 zu dem zweiten Anschluss 8 des Anschlussstücks 3 geleitet.

Da es oftmals nötig ist, den Wasserdruck in der Wasserleitung zu reduzieren, kann dies besonders einfach über den Einstellknopf 4 vorgenommen werden. Durch ein Drehen des Knopfes in entgegengesetzte Richtungen kann entweder die Druckminderung erhöht oder reduziert werden, wobei die Größe des reduzierten Drucks direkt an dem Manometer 5 abgelesen werden kann. Entsprechende Techniken zur Druckreduzierung sind aus dem Stand der Technik bekannt.

In Figur 4 ist eine Schnittansicht durch die Flanschverbindung 9 entlang der Linie E-E von Figur 3 gezeigt. Wie dort zu erkennen ist, ist die Flanschverbindung 9 kreisrund ausgebildet und umfasst einen ersten Flansch 12 des Anschlussstücks 3 und einen zweiten Flansch 13 des Wasserfilters 2. Der zweite Flansch 13 umfasst vier Haltesegmente 14, welche jeweils kreisbogenförmig ausgebildet sind und einen Viertelkreis überspannen, so dass die vier Haltesegmente 14 in Umfangsrichtung verteilt angeordnet einen geschlossenen Kreis bilden. Wie in den folgenden Figuren gezeigt ist, hintergreifen diese Haltesegmente 14 des zweiten Flansches 13 formschlüssig den ersten Flansch 12 des Anschlussstücks 3, so dass eine sichere, aber drehbare gegenseitige Befestigung gewährleistet wird.

Wie in Figur 4 zudem gezeigt ist, wird der Strömungsraum innerhalb der Wasserbehandlungsvorrichtung 1 im Bereich der Flanschverbindung 9 durch ein kreisrundes Innenrohr 15 in einen äußeren Zustromkanal 16 und einen inneren Abströmkanal 17 getrennt, so dass unfiltriertes zuströmendes Wasser im Zuströmkanal 16 sich nicht mit filtriertem Wasser im Abströmkanal 17 mischen kann. Im Anschlussstück 3 ist dabei der erste Anschluss 7 mit dem äußeren Zuströmkanal 16 und der zweite Anschluss 8 mit dem inneren Abströmkanal 17 verbunden. Durch diese kreisrunde Ausgestaltung und konzentrische Anordnung des inneren Abströmkanals und des äußeren Zuström(ring)kanals 16 wird erreicht, dass unabhängig von der gegenseitigen Winkellage des Wasserfilters 2 zu dem Anschlussstück 3 eine zuverlässige Führung des Wassers in der Flanschverbindung 9 zwischen dem Anschlussstück 3 und dem Wasserfilter 2 gewährleistet wird.

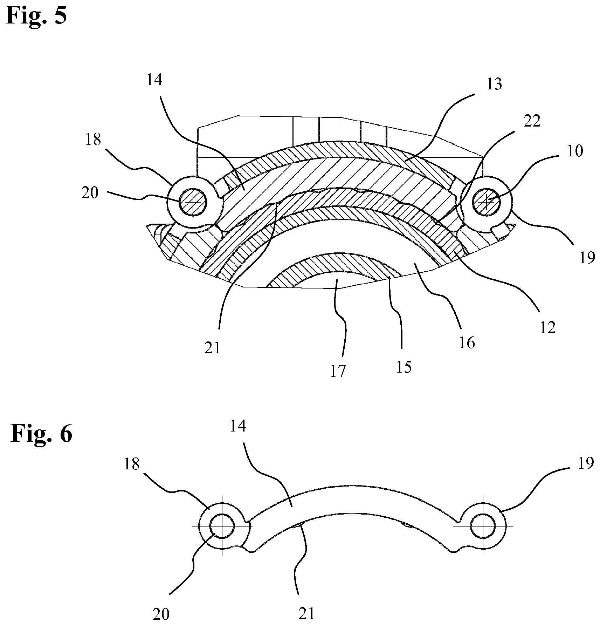

In Figur 5 ist eine Detailansicht des Bereichs X der Flanschverbindung 9 aus Figur 4 gezeigt. Wie dort zu erkennen ist, weisen die Haltesegmente 14 an ihren gegenüberliegenden Enden 18, 19 jeweils eine Aussparung in Form eines Bohrlochs 20 auf, durch welches jeweils eine der Schrauben 10 geführt ist. Die Schrauben 10 sind über eine Gewindeverbindung mit dem Wasserfilter 2 lösbar verbunden und fixieren damit die Haltesegmente 14 an dem Wasserfilter 2. In Umfangsrichtung aneinander angrenzende Haltesegmente 14 überlappen sich dabei derart, dass mittels einer Schraube 10, welche durch die konzentrischen Bohrlöcher 20 in den Enden 18, 19 der aneinander angrenzenden Haltesegmente 14 geführt ist, beide Enden 18, 19 gleichermaßen fixiert werden. Auf diese Weise können bei dem gezeigten Beispiel die vier Haltesegmente 14 gleichmäßig mit nur vier Schrauben 10 an dem Wasserfilter 2 befestigt werden.

Um reproduzierbare Winkellagen des Wasserfilters 2 zu dem Anschlussstück 3 schnell und einfach einstellen zu können, sind an den Haltesegmenten 14 mehrere radial nach innen vorstehende Vorsprünge 21 vorgesehen, welche zum elastisch rastenden Eingriff mit am korrespondierenden ersten Flansch 12 in Umfangsrichtung angeordneten und nach außen gerichteten Rastnuten 22 ausgebildet sind. Die Vorsprünge 21 greifen elastisch federnd in die Rastnuten 22 ein, so dass bei einer manuellen Verdrehung der relativen Winkellage des Wasserfilters 2 zu dem Anschlussstück 3 einfach eine Verstellung in der Winkelteilung der Rastnuten 22 erfolgen kann und automatisch eine gegenseitige Fixierung erfolgt. Die Winkelteilung der Rastnuten 22 kann dabei 15° betragen, wodurch 24 relative Winkellagen zwischen dem Wasserfilter 2 und dem Anschlussstück 3 einstellbar sind.

In Figur 6 ist ein Haltesegment 14 isoliert dargestellt. Bei dem gezeigten Beispiel sind die Haltesegmente 14 eben ausgebildet. Um trotz der oben beschriebenen Überlappung der Haltesegmente 14 an ihren Enden 18 und 19 eine gleichmäßige flächige Anlage an den Flanschen 12 und 13 zu ermöglichen, ist jedes Haltesegment 14 im Bereich des ersten Endes 18 gegenüber dem Rest des Haltesegmentes und insbesondere dem zweiten Ende 19 um die Dicke des zweiten Endes rechtwinklig zur ebenen Erstreckung des Haltesegments 14, in Figur 6 also rechtwinklig zur Zeichenebene, versetzt. Hierdurch bilden die Haltesegmente 14 trotz der Überlappung im Bereich der Enden 18, 19 einen weitestgehend geschlossenen ebenen Ring für ein gleichmäßiges Hintergreifen des ersten Flansches 12 und Andrücken gegen den zweiten Flansch 13.

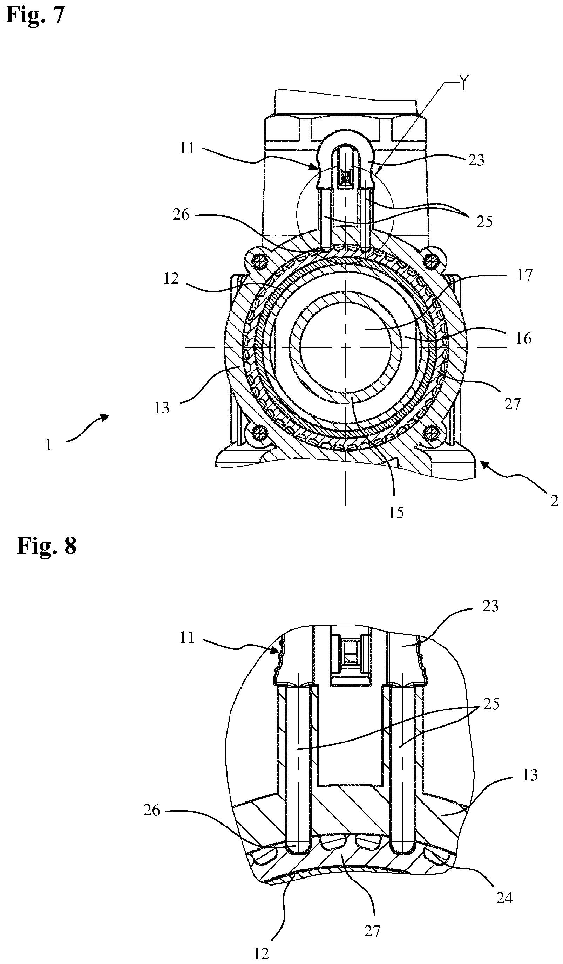

In Figur 7 ist die Arretiervorrichtung 11 in einer Schnittansicht durch die Wasserbehandlungsvorrichtung 1 entlang der Linie D-D von Figur 2 gezeigt. Die Arretiervorrichtung 11 wird durch einen U-förmigen Bügel 23 gebildet, welcher in dem zweiten Flansch 13 verschiebbar geführt und zum lösbaren Eingriff mit in Umfangsrichtung verteilt angeordneten Arretiernuten 24 an dem korrespondierenden ersten Flansch 12 ausgebildet ist. Dazu weist der U-förmige Bügel 23 zwei gerade Schenkel 25 auf, welche an ihren freien Enden 26 in die entsprechenden Arretiernuten 24 eingreifen. Die Arretiernuten 24 sind in Umfangsrichtung gleichmäßig verteilt auf einem fest mit dem ersten Flansch 12 verbundenen Zahnkranz 27 angeordnet. Anstelle es U-förmigen Bügels 23 kann auch eine Klemmschraube oder ein ähnliches Arretiermittel verwendet werden.

In Figur 8 ist eine Detailansicht des Bereichs Y von Figur 7 gezeigt. Wie dort zu entnehmen ist, stehen die beiden freien Enden 26 der Schenkel 25 der Arretiervorrichtung 11 in der gezeigten Arretierstellung radial nach innen aus entsprechenden Führungen in dem zweiten Flansch 13 vor und greifen in zwei der Arretiernuten 24 des Zahnkranz 27 haltend ein. Durch manuellen Zug an dem bogenförmigen, als Handgriff ausgebildeten Teil des U-förmigen Bügels 23 radial nach außen kann die Arretiervorrichtung 11 in eine Lösestellung verschoben werden, in welcher die Arretiervorrichtung 11 nicht in Eingriff mit den Arretiernuten 24 steht. In dieser Lösestellung kann die Winkellage des Wasserfilters 2 gegenüber dem Anschlussstück 3 frei um 360° gedreht werden, wobei durch die elastische Verrastung der Vorsprünge 21 in die Rastnuten 22 die hierdurch vorgegebenen Winkelstellungen besonders einfach einstellbar sind.

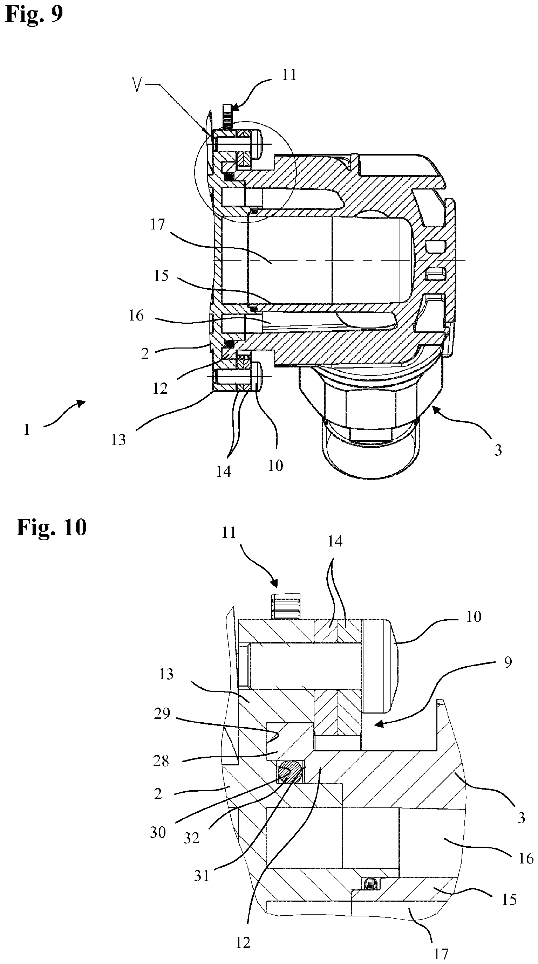

In Figur 9 ist ein Teilschnitt der Wasserbehandlungsvorrichtung 1 entlang der Linie F-F von Figur 1 gezeigt. Die Schnittlinie F-F ist dabei so gewählt, dass zwei der vier gleichmäßig in Umfangsrichtung der Flanschverbindung 9 angeordneten Schrauben 10 zur Befestigung der Flanschverbindung 9 mittig geschnitten dargestellt sind. Wie aus der Figur 9 und insbesondere der Detailansicht des Bereichs V von Figur 9 in Figur 10 zu entnehmen ist, sind die Schrauben 10 über eine Gewindeverbindung mit dem Wasserfilter 2 verbunden und drücken damit die Haltesegmente 14 gegen den Wasserfilter 2. Die Haltesegmente 14 hintergreifen dabei von außen einen Ringsteg 28 des ersten Flansches 12 des Anschlussstücks 3. Der Ringsteg 28 des ersten Flansches 12 ist in einer korrespondierenden Ringnut 29 des Wasserfilters 2 angeordnet. Der zweite Flansch 13 umfasst die Ringnut 29 und die Haltesegmente 14.

Durch das formschlüssige Hintergreifen des Ringstegs 28 des ersten Flansches 12 durch die Haltesegmente 14 des zweiten Flansches 13 wird eine sichere Halterung und eine definierte und dauerhafte gegenseitige Positionierung der Flanschverbindung 9 ermöglicht. Durch die kreisförmige ebene Anordnung der Haltesegmente 14 wird, anders als bei einer helixförmigen Anordnung beispielsweise einer Gewindeverbindung, die axiale Lage des ersten Flansches 12 zu dem zweiten Flansch 13 bei einer gegenseitigen Verdrehung nicht verändert, so dass sich hierdurch auch die Verschraubung der Flanschverbindung 9 nicht lockern kann.

Um eine zuverlässige Abdichtung zu gewährleisten, ist zwischen einander gegenüberliegenden ebenen Ringflächen 30, 31 des ersten Flansch 12 und des zweiten Flansch 13 eine Ringdichtung 32 angeordnet, welche durch die Schrauben 10 über die Haltesegmente 14 und den ersten Flansch 12 gequetscht wird und somit axial abdichtet. Durch die geometrischen Abmessungen des zweiten Flansches 13 kann die Vorspannung der Ringdichtung 30 exakt vorgegeben werden, wenn die Haltesegmente 14 mittels der Schrauben 10 zur Anlage an dem Wasserfilter 2 gelangen. Hierdurch werden eine schnelle Montage und eine zuverlässige und dauerhafte Abdichtung gewährleistet.

Wie aus der Figur 10 deutlich zu erkennen ist, überlappen sich die in Umfangsrichtung aneinander angrenzenden Haltesegmente 14 im Bereich der Schrauben 10, so dass mit einer Schraube 10 jeweils zwei Enden von Haltesegmenten 14 gleichzeitig befestigt sind. Hierdurch ergibt sich ein besonders gleichmäßiges Andrücken der Haltesegmente 14 und damit eine stabile und zuverlässig abgedichtete Flanschverbindung 9.

Aus den Figuren 9 und 10 ist zudem die axiale Anordnung der Arretiervorrichtung 11 an der Flanschverbindung 9 zu entnehmen. Die Arretiervorrichtung 11 ist dabei in dem zweiten Flansch 13 radial versetzt zu dem Ringsteg 28 des ersten Flansches 12 angeordnet, wobei der Zahnkranz 27 mit den Arretiernuten 24 in der Schnittansicht nicht dargestellt ist, sich jedoch in dem Ringsteg 28 befindet.

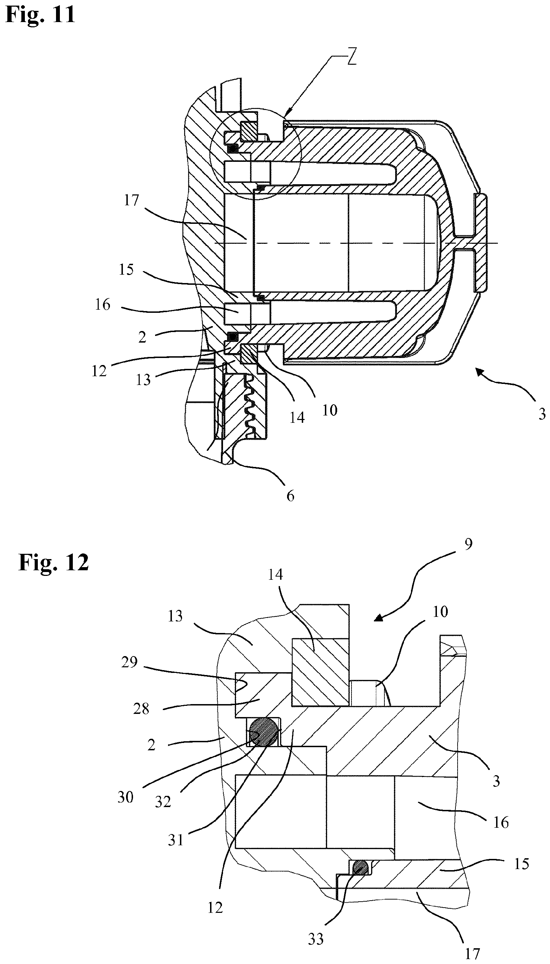

In Figur 11 ist ein Teilschnitt entlang der Linie B-B von Figur 3 gezeigt. Anders als der schräge Schnittverlauf der Figuren 9 und 10 verläuft dieser Schnitt vertikal durch die Wasserbehandlungsvorrichtung 1. Wie dort und insbesondere in der Detailansicht des Bereichs Z von Figur 11 in Figur 12 zu entnehmen ist, wird der Ringsteg 28 in Umfangsrichtung zwischen den Schrauben 10 von jeweils einem Haltesteg 14 formschlüssig hintergriffen. Die an jedem Haltesegment 14 radial nach innen vorstehenden Vorsprünge 21 sind in diesen Figuren nicht dargestellt. Die Vorsprünge 21 greifen jedoch in entsprechende, in Umfangsrichtung um den korrespondierenden ersten Flansch 12 angeordnete radial nach außen gerichtete Rastnuten 22 elastisch federnd ein.

Wie aus Figur 12 zudem hervorgeht, ist in der Flanschverbindung 9 das Innenrohr 15 zweiteilig ausgebildet und über eine weitere Dichtung 33 drehbar abgedichtet. Wie auch die Ringdichtung 32 wird die weitere Dichtung 33 über die Schrauben 10 mittels der Haltesegmente 14 in Position gehalten.

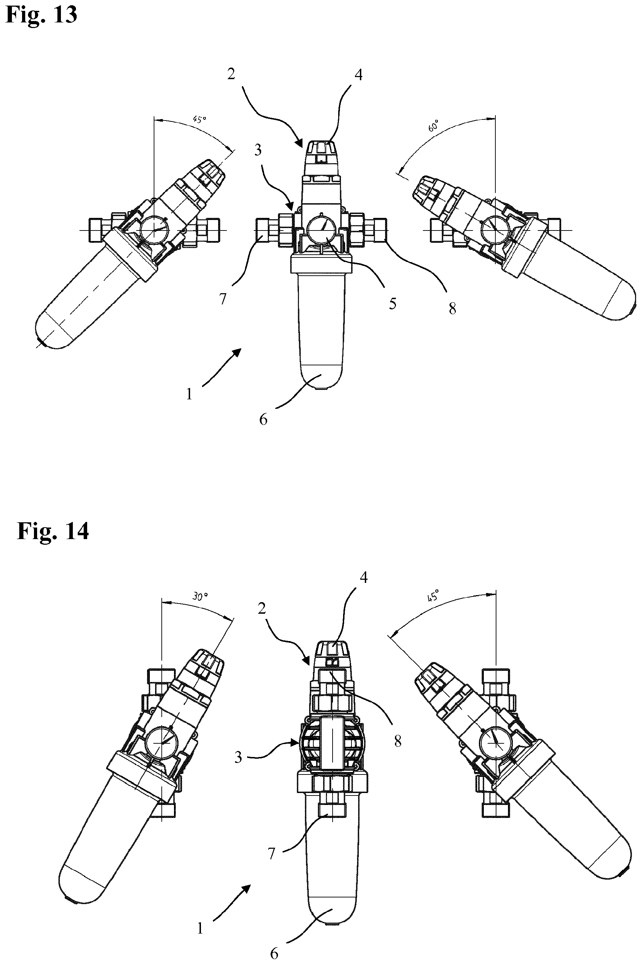

In Figur 13 sind verschiedene Orientierungen des Wasserfilters 2 relativ zu dem Anschlussstück 3 dargestellt. Die nicht dargestellte Rohrleitung der Hausinstallation verläuft in diesem Montagebeispiel waagrecht, so dass auch das Anschlussstück 3 mit dem ersten Anschluss 7 und dem zweiten Anschluss 8 horizontal orientiert ist. Der Wasserfilter 2 bzw. jedes andere mit dem Anschlussstück 3 verbundene Wasserbehandlungsgerät kann damit 360° relativ zu dem Anschlussstück gedreht werden, um eine Montage beispielsweise bei beengten Platzverhältnissen erst zu ermöglichen oder aber nach der Montage eine entsprechende vorgeschriebene Orientierung des Wasserbehandlungsgeräts einzustellen. Durch die Winkelteilung von 15° der Rastnuten 22 können oftmals verwendete Winkellagen wie 45°, 60° und 90° schnell und präzise von Hand eingestellt werden. Es können jedoch auch alle Zwischenwinkel eingestellt werden. Ebenso ist auch eine Arretierung durch die Arretiervorrichtung 11 in den Zwischenwinkeln möglich, da die Winkelteilung der Arretiernuten 24 im Zahnkranz 27 ein Vielfaches der Winkelteilung der Rastnuten 22 aufweist. Die Winkelteilung der Rastnuten 22 ist jedoch derart gegenüber der Winkelteilung der Arretiernuten 24 abgestimmt, dass jede Winkellage der Vorsprünge 21 in den Rastnuten 22 über die Arretiervorrichtung 11 sicher arretiert werden kann.

In Figur 14 sind verschiedene Orientierungen des Wasserfilters 2 relativ zu dem Anschlussstück 3 dargestellt, wobei anders als bei dem Montagebeispiel in Figur 13 die nicht dargestellte Rohrleitung der Hausinstallation vertikal verläuft, so dass auch das Anschlussstück 3 mit dem ersten Anschluss 7 und dem zweiten Anschluss 8 vertikal orientiert ist. Mit der Flanschverbindung 9 ist es möglich, unabhängig von der Orientierung der Rohrleitung und damit des Anschlussstücks 3 den Wasserfilter 2 bzw. jegliches Wasserbehandlungsgerät auch nach der Montage frei zu drehen und damit in eine gewünschte Ausrichtung zu bringen, ohne dass hierdurch die Flanschverbindung 9 und insbesondere die Dichtwirkung der Flanschverbindung 9 beeinträchtigt werden würde. Das Wasserbehandlungsgerät, hier in Form des Wasserfilters 2, kann insbesondere auch ohne Weiteres mit dem Anschlussstück 3 vormontiert werden, so dass ein korrekter Zusammenbau gewährleistet und eine schnelle und fehlerfreie Montage in der betreffenden Hausinstallation ermöglicht wird.

Damit ist es auch möglich, unabhängig von der Durchflussrichtung der Rohrleitungen der Hausinstallation die vormontierte Wasserbehandlungsvorrichtung schnell zu montieren. Verläuft die Durchflussrichtung beispielsweise entgegen dem in Figur 1 beschriebenen Beispiel von rechts nach links, kann das gezeigte Wasserbehandlungsgerät einfach durch Drehen des Anschlussstücks 3 um 180° gegenüber dem Wasserfilter 2 vor der Montage an der Hausinstallation an diese Durchflussrichtung angepasst werden.

In einem nicht dargestellten weiteren Beispiel kann der in Figur 4 in der Draufsicht gezeigte zweite Flansch 13 insgesamt nur zwei Haltesegmente 14 umfassen, welche jeweils kreisbogenförmig ausgebildet sind und einen Halbkreis überspannen, so dass die zwei Haltesegmente 14 in Umfangsrichtung verteilt angeordnet einen geschlossenen Kreis bilden. Dabei können ebenso wie in Figur 4 dargestellt insgesamt vier Befestigungselemente in Form der Schrauben 10 zur Fixierung der Haltesegmente 14 an dem zweiten Flansch 13 vorgesehen sein. Die Schrauben 10 sind dabei in Umfangsrichtung gleichmäßig verteilt angeordnet, wobei jeweils eine Schraube 10 mittig an einem Haltesegment 14 angeordnet ist und die zwei weiteren Schrauben 10 im Kontaktbereich der aneinander angrenzenden halbkreisförmigen Haltesegmente 14 angeordnet sind und beide Haltesegmente 14 gleichermaßen gegen den zweiten Flansch 13 andrücken. Wie beispielsweise bezüglich dem in Figur 5 gezeigten Beispiel beschrieben, können die Haltesegmente 14 auch in dem nicht dargestellten Beispiel einander im Kontaktbereich in Umfangsrichtung überlappen.

Es ist jedoch auch möglich, dass sich die zwei Haltesegmente 14 in Umfangsrichtung nicht überlappen, sondern in einem Kontaktbereich in Umfangsrichtung aneinander anstehen, wobei sie jeweils eine halbkreisförmige Aussparung für die Schrauben 10 im Kontaktbereich aufweisen. Da die zwei Haltesegmente 14 bei diesem Ausführungsbeispiel bereits durch die mittig an den Haltesegmenten 14 angeordneten Schrauben 10 bei der Vormontage formschlüssig und positionsgenau an dem zweiten Flansch 13 gehalten werden, wird die Montage hierdurch vereinfacht.

Anstelle der in den Figuren 4 und 5 gezeigten radial nach innen vorstehenden Vorsprünge 21 an den Haltesegmenten 14, welche zum elastisch rastenden Eingriff mit am korrespondierenden ersten Flansch 12 in Umfangsrichtung angeordneten und radial nach außen gerichteten Rastnuten 22 ausgebildet sind, kann eine reproduzierbare Winkellage des Wasserfilters 2 zu dem Anschlussstück 3 in einer nicht gezeigten Ausführungsform auch dadurch erreicht werden, dass in einem Ringspalt zwischen einander gegenüberliegenden ebenen Ringflächen des ersten Flansches 12 und des zweiten Flansches 13 eine Ringfeder angeordnet ist. Bei dem in Figur 10 gezeigten Beispiel kann diese Ringfeder beispielsweise in einem zusätzlichen Ringspalt zwischen der Ringnut 29 und dem Ringsteg 28 angeordnet sein, also koaxial zur Drehachse A ausgerichtet. Die Ringfeder ist dabei beispielsweise über einen radial vorstehenden Vorsprung drehfest mit dem zweiten Flansch 13 verbunden und greift über eine in Richtung des ersten Flansches 12 in Richtung der Drehachse A vorstehende Nase elastisch haltend in entsprechende Aussparungen in der gegenüberliegenden ebenen Ringfläche des ersten Flansches 12 ein.

Alternativ kann die Ringfeder aber auch über entsprechende Vorsprünge drehfest mit dem ersten Flansch 12 verbunden sein und über mindestens eine in Richtung des zweiten Flansches 13 in Richtung der Drehachse A vorstehende Nase elastisch haltend in entsprechende Aussparungen in der gegenüberliegenden ebenen Ringfläche des zweiten Flansches 13 eingreifen. In einer weiteren vorteilhaften Ausführungsform können an der Ringfeder zu beiden ebenen Ringflächen hin vorstehende Nasen angeordnet sein, welche in entsprechend Aussparungen in den gegenüberliegenden ebenen Ringflächen des ersten Flansches 12 und des zweiten Flansches 13 elastisch haltend eingreifen. Hierbei kann auf eine Fixierung der Ringfeder gegenüber einer der Flansche 12, 13 mittels des radial vorstehenden Vorsprungs verzichtet werden. Die zu beiden Seiten der Ringfeder axial vorstehenden Nasen können jeweils in Richtung der Drehachse A fluchtend oder voneinander versetzt sein. Bei einem Versatz der Nasen an den gegenüberliegenden Seiten der Ringfeder kann die Elastizität der Ringfeder besonders vorteilhaft ausgenutzt werden.

In allen beschriebenen Ausführungsformen können die Nasen vorteilhaft einen runden Querschnitt aufweisen, insbesondere in der Seitenansicht auf die Ringfeder (Blickrichtung rechtwinklig zur Drehachse A). Die korrespondierenden Aussparungen in den ebenen Ringflächen des ersten Flansches 12 oder des zweiten Flansches 13 können dabei einen korrespondierenden Bogenförmigen Querschnitt oder auch einen spitzen Querschnitt aufweisen. Auch können die radialen Vorsprünge in den betreffenden Ausführungsformen in der Draufsicht (entlang der Drehachse A) einen spitzen Querschnitt oder auch einen runden Querschnitt zum haltenden Eingriff in entsprechende Ausnehmungen in dem ersten Flansch 12 bzw. dem zweiten Flansch 13 haben. Zusätzlich zur Form kann auch über die Elastizität des Materials der Nasen und die geometrischen Abmessungen die Haltewirkung beeinflusst werden.

Zur Zentrierung der Ringfeder gegenüber den Flanschen 12, 13 kann an einem der Flansche 12, 13 ein hülsenförmiger Abschnitt vorgesehen sein, welcher sich direkt an die Ringfläche des betreffenden Flansches anschließt und dessen Außendurchmesser im Wesentlichen dem Innendurchmesser der Ringfeder entspricht. Hierdurch wird die Ringfeder an dem hülsenförmigen Abschnitt abgestützt und gegenüber den Flanschen 12, 13 zentriert.

Durch die kreisförmige Anordnung der Aussparungen in der ebenen Ringfläche des ersten Flansches 12 können die Winkellagen präzise vorgegeben und eingestellt werden. Durch die maßliche Auslegung der Haltesegmente 14 kann dabei die Vorspannung auf die Ringfeder bei der Vormontage des Wasserbehandlungsgeräts 2 mit dem Anschlussstück 3 genau eingestellt werden. Bei einer manuellen Verdrehung des Wasserbehandlungsgeräts 2 gegenüber dem Anschlussstück 3 löst sich dabei die vorstehende Nase der Ringfeder aus der betreffenden Aussparung in dem ersten Flansch 12 und rastet anschließend in der in Drehrichtung nächsten Aussparung ein, wodurch dem Anwender eine bestimmte Winkellage signalisiert wird. Diese Drehung kann so lange wiederholt werden, bis die gewünschte relative Winkellage zwischen dem Wasserbehandlungsgerät 2 und dem Anschlussstück 3 erreicht ist. Im Übrigen kann die nicht dargestellte Ausführungsform die weiteren Merkmale der in den Figuren dargestellten Beispiele aufweisen.

### Bezugszeichenliste

- A: Drehachse
- 1: Wasserbehandlungsvorrichtung
- 2: Wasserfilter
- 3: Anschlussstück
- 4: Einstellknopf
- 5: Manometer
- 6: Filterpatrone
- 7: Erster Anschluss
- 8: Zweiter Anschluss
- 9: Flanschverbindung
- 10: Schraube
- 11: Arretiervorrichtung
- 12: Erster Flansch
- 13: Zweiter Flansch
- 14: Halte segment
- 15: Innenrohr
- 16: Äußerer Zuströmkanal
- 17: Innerer Abströmkanal
- 18: Erstes Ende
- 19: Zweites Ende
- 20: Bohrloch
- 21: Vorsprung
- 22: Rastnut
- 23: Bügel
- 24: Arretiernuten
- 25: Schenkel
- 26: Freies Ende der Schenkel
- 27: Zahnkranz
- 28: Ringsteg
- 29: Ringnut
- 30: Ringfläche des zweiten Flansches
- 31: Ringfläche des ersten Flansches
- 32: Ringdichtung
- 33: Weitere Dichtung

## Patentansprüche

1. Wasserbehandlungsvorrichtung (1) zur Installation in einer Wasserleitung, umfassend ein Wasserbehandlungsgerät (2) zur Behandlung von Wasser und ein Anschlussstück (3) zur Verbindung der Wasserbehandlungsvorrichtung (1) mit der Wasserleitung, wobei zwischen dem Wasserbehandlungsgerät (2) und dem Anschlussstück (3) eine Flanschverbindung (9) mit einem ersten Flansch (12) an dem Anschlussstück (3) und einem dazu korrespondierenden zweiten Flansch (13) an dem Wasserbehandlungsgerät (2) vorgesehen ist, wobei der zweite Flansch (13) an dem Wasserbehandlungsgerät (2) den ersten Flansch (12) an dem Anschlussstück (3) haltend hintergreift, sodass eine freie Verdrehung des Wasserbehandlungsgeräts (2) gegenüber dem Anschlussstück (3) möglich ist,
**dadurch gekennzeichnet, dass** in
einem Ringspalt zwischen einander gegenüberliegenden ebenen Ringflächen des ersten Flansches (12) und des zweiten Flansches (13) eine Ringfeder zum Erreichen einer reproduzierbaren Winkellage des Wasserbehandlungsgeräts (2) zu dem Anschlussstück (3) angeordnet ist.

2. Wasserbehandlungsvorrichtung (1) nach Anspruch 1, **dadurch gekennzeichnet, dass** der erste Flansch (12) oder der zweite Flansch (13) mindestens ein Haltesegment (14) aufweist, welches einen Ringsteg (28) an dem korrespondierenden zweiten Flansch (13) bzw. ersten Flansch (12) haltend hintergreift.

3. Wasserbehandlungsvorrichtung (1) nach Anspruch 2, **dadurch gekennzeichnet, dass** jedes Haltesegment (14) durch mindestens ein Befestigungselement (10) an dem ersten Flansch (12) oder dem zweiten Flansch (13) lösbar befestigt ist.

4. Wasserbehandlungsvorrichtung (1) nach Anspruch 2 oder 3, **dadurch gekennzeichnet, dass** an jedem Haltesegment (14) mindestens ein Vorsprung (21) vorgesehen ist, welcher zum rastenden Eingriff in mindestens eine am korrespondierenden zweiten Flansch (13) bzw. ersten Flansch (12) angeordnete Rastnut (22) ausgebildet ist.

5. Wasserbehandlungsvorrichtung (1) nach Anspruch 4, **dadurch gekennzeichnet, dass** jeder Vorsprung (21) von jedem Haltesegment (14) radial nach innen vorsteht und mehrere korrespondierende Rastnuten (22) in Umfangsrichtung um den korrespondierenden zweiten Flansch (13) bzw. ersten Flansch (12) herum radial nach außen gerichtet angeordnet sind.

6. Wasserbehandlungsvorrichtung (1) nach Anspruch 5, **dadurch gekennzeichnet, dass** die Rastnuten (22) gleichmäßig in Umfangsrichtung um den korrespondierenden zweiten Flansch (13) bzw. ersten Flansch (12) angeordnet sind, insbesondere in einer Winkelteilung von 15°.

7. Wasserbehandlungsvorrichtung (1) nach Anspruch 1, **dadurch gekennzeichnet, dass** die Ringfeder mindestens eine axial vorstehende Rastnase aufweist.

8. Wasserbehandlungsvorrichtung (1) nach Anspruch 1, **dadurch gekennzeichnet, dass** die Rastnase zum elastisch rastenden Eingriff in mindestens eine am korrespondierenden Flansch angeordnete Rastnut ausgebildet ist.

9. Wasserbehandlungsvorrichtung (1) nach einem der Ansprüche 2 bis 8, **dadurch gekennzeichnet, dass** jedes Haltesegment (14) an gegenüberliegenden Enden (18; 19) eine Aussparung (20) zur Aufnahme eines Befestigungselements (10) aufweist.

10. Wasserbehandlungsvorrichtung (1) nach Anspruch 9, **dadurch gekennzeichnet, dass** sich die Haltesegmente (14) im Bereich der Enden (18; 19) überlappen.

11. Wasserbehandlungsvorrichtung (1) nach Anspruch 9 oder 10, **dadurch gekennzeichnet, dass** jedes Haltsegment (14) eben ausgebildet ist und das erste Ende (18) jedes Haltesegments (14) gegenüber dem zweiten Ende (19) um die Dicke des zweiten Endes (19) rechtwinklig zur ebenen Erstreckung des Haltesegments (14) versetzt ist.

12. Wasserbehandlungsvorrichtung (1) nach einem der vorhergehenden Ansprüche, **dadurch gekennzeichnet, dass** an dem ersten Flansch (12) oder dem zweiten Flansch (13) eine Arretiervorrichtung (11) angeordnet ist, welche zum lösbaren Eingriff mit in Umfangsrichtung verteilt angeordneten Arretiernuten (24) an dem korrespondierenden zweiten Flansch (13) bzw. ersten Flansch (12) ausgebildet ist.

13. Wasserbehandlungsvorrichtung (1) nach Anspruch 12, **dadurch gekennzeichnet, dass** die Arretiervorrichtung (11) zwischen einer Lösestellung, in welcher die Arretiervorrichtung (11) nicht in Eingriff mit den Arretiernuten (24) steht, und einer Arretierstellung, in welcher die Arretiervorrichtung (11) mit mindestens einer der Arretiernuten (24) in Eingriff steht, verschiebbar ist.

14. Wasserbehandlungsvorrichtung (1) nach einem der vorhergehenden Ansprüche, **dadurch gekennzeichnet, dass** zwischen einander gegenüberliegenden ebenen Ringflächen (30; 31) des ersten Flansches (12) und des zweiten Flansches (13) eine Dichtung (32; 33) angeordnet ist.

15. Wasserbehandlungsvorrichtung (1) nach einem der vorhergehenden Ansprüche, **dadurch gekennzeichnet, dass** das Wasserbehandlungsgerät (2) ein Wasserfilter und/oder eine Impfstelle mit Dosiervorrichtung und/oder eine Enthärtungsanlage und/oder ein Wasserzähler ist.

## Claims

1. Water treatment device (1) for installation in a water pipe, comprising a water treatment unit (2) for treatment of water and a connector (3) for connecting the water treatment device (1) to the water pipe, wherein between the water treatment unit (2) and the connector (3), a flange connection (9) with a first flange (12) is provided on the connector (3) and a second flange (13) corresponding thereto is provided on the water treatment unit (2), wherein the second flange (13) on the water treatment unit (2) engages behind the first flange (12) on the connector (3) in holding manner so that free rotation of the water treatment unit (2) with respect to the connector (3) is possible, **characterised in that** an annular spring for achieving a reproducible angular position of the water treatment unit (2) with respect to the connector (3) is arranged in an annular gap between flat annular surfaces opposite one another of the first flange (12) and of the second flange (13).

2. Water treatment device (1) according to claim 1, **characterised in that** the first flange (12) or the second flange (13) has at least one holding segment (14) which engages behind an annular bar (28) on the corresponding second flange (13) or first flange (12) in holding manner.

3. Water treatment device (1) according to claim 2, **characterised in that** each holding segment (14) is attached to the first flange (12) or the second flange (13) to be releasable by at least one attachment element (10).

4. Water treatment device (1) according to claim 2 or 3, **characterised in that** at least one projection (21), which is designed for latching engagement in at least one latching groove (22) arranged on the corresponding second flange (13) or first flange (12), is provided on each holding segment (14).

5. Water treatment device (1) according to claim 4, **characterised in that** each projection (21) protrudes radially inwards from each holding segment (14) and several corresponding latching grooves (22) are arranged peripherally around the corresponding second flange (13) or first flange (12) directed radially outwards.

6. Water treatment device (1) according to claim 5, **characterised in that** the latching grooves (22) are arranged peripherally uniformly around the corresponding second flange (13) or first flange (12), in particular at an angle division of 15°.

7. Water treatment device (1) according to claim 1, **characterised in that** the annular spring has at least one axially protruding latch.

8. Water treatment device (1) according to claim 1, **characterised in that** the latch is designed for elastically latching engagement in at least one latching groove arranged on the corresponding flange.

9. Water treatment device (1) according to one of claims 2 to 8, **characterised in that** each holding segment (14) has on opposite ends (18; 19) a recess (20) for receiving an attachment element (10).

10. Water treatment device (1) according to claim 9, **characterised in that** the holding segments (14) overlap in the region of the ends (18; 19).

11. Water treatment device (1) according to claim 9 or 10, **characterised in that** each holding segment (14) is designed to be flat and the first end (18) of each holding segment (14) is offset with respect to the second end (19) by the thickness of the second end (19) at right angles to the flat extension of the holding segment (14).

12. Water treatment device (1) according to one of the preceding claims, **characterised in that** a locking device (11), which is designed for releasable engagement with locking grooves (24) arranged peripherally distributed on the corresponding second flange (13) or first flange (12), is arranged on the first flange (12) or the second flange (13).

13. Water treatment device (1) according to claim 12, **characterised in that** the locking device (11) is displaceable between a release position, in which the locking device (11) is not in engagement with the locking grooves (24), and a locking position, in which the locking device (11) is in engagement with at least one of the locking grooves (24).

14. Water treatment device (1) according to one of the preceding claims, **characterised in that** a seal (32; 33) is arranged between flat annular surfaces (30; 31) opposite one another of the first flange (12) and of the second flange (13).

15. Water treatment device (1) according to one of the preceding claims, **characterised in that** the water treatment unit (2) is a water filter and/or an injection point with metering device and/or a softening plant and/or a water meter.

## Revendications

1. Dispositif de traitement de l'eau (1) pour l'installation dans une conduite d'eau, comprenant un appareil de traitement de l'eau (2) pour le traitement d'eau et une pièce de raccordement (3) pour la liaison du dispositif de traitement de l'eau (1) à la conduite d'eau, dans lequel une liaison par bride (9) avec une première bride (12) au niveau de la pièce de raccordement (3) et une deuxième bride (13) correspondant à celle-ci au niveau de l'appareil de traitement de l'eau (2) est prévue entre l'appareil de traitement de l'eau (2) et la pièce de raccordement (3), dans lequel la deuxième bride (13) au niveau de l'appareil de traitement de l'eau (2) vient en prise par-derrière avec la première bride (12) en la retenant au niveau de la pièce de raccordement (3), de sorte qu'une rotation libre de l'appareil de traitement de l'eau (2) par rapport à la pièce de raccordement (3) soit possible, **caractérisé en ce qu'**un ressort annulaire est disposé dans une fente annulaire entre des surfaces annulaires planes se faisant face l'une l'autre de la première bride (12) et de la deuxième bride (13) pour l'atteinte d'une position angulaire reproductible de l'appareil de traitement de l'eau (2) par rapport à la pièce de raccordement (3).

2. Dispositif de traitement de l'eau (1) selon la revendication 1, **caractérisé en ce que** la première bride (12) ou la deuxième bride (13) présente au moins un segment de retenue (14), lequel vient en prise par-derrière avec une traverse annulaire (28) en la retenant au niveau de la deuxième bride (13) ou première bride (12) correspondante.

3. Dispositif de traitement de l'eau (1) selon la revendication 2, **caractérisé en ce que** chaque segment de retenue (14) est fixé de manière amovible par au moins un élément de fixation (10) à la première bride (12) ou à la deuxième bride (13).

4. Dispositif de traitement de l'eau (1) selon la revendication 2 ou 3, **caractérisé en ce qu'**au moins une saillie (21) est prévue au niveau de chaque segment de retenue (14), laquelle est réalisée pour la mise en prise par encliquetage avec au moins une rainure d'encliquetage (22) disposée au niveau de la deuxième bride (13) ou première bride (12) correspondante.

5. Dispositif de traitement de l'eau (1) selon la revendication 4, **caractérisé en ce que** chaque saillie (21) de chaque segment de retenue (14) fait saillie radialement vers l'intérieur et plusieurs rainures d'encliquetage (22) correspondantes sont disposées dirigées radialement vers l'extérieur dans la direction périphérique autour de la deuxième bride (13) ou première bride (12) correspondante.

6. Dispositif de traitement de l'eau (1) selon la revendication 5, **caractérisé en ce que** les rainures d'encliquetage (22) sont disposées régulièrement dans la direction périphérique autour de la deuxième bride (13) ou première bride (12) correspondante, en particulier avec un pas angulaire de 15°.

7. Dispositif de traitement de l'eau (1) selon la revendication 1, **caractérisé en ce que** le ressort annulaire présente au moins un nez d'encliquetage en saillie axiale.

8. Dispositif de traitement de l'eau (1) selon la revendication 1, **caractérisé en ce que** le nez d'encliquetage est réalisé pour la mise en prise par encliquetage élastique avec au moins une rainure d'encliquetage disposée au niveau de la bride correspondante.

9. Dispositif de traitement de l'eau (1) selon l'une quelconque des revendications 2 à 8, **caractérisé en ce que** chaque segment de retenue (14) présente, à des extrémités (18 ; 19) opposées, un évidement (20) pour la réception d'un élément de fixation (10).

10. Dispositif de traitement de l'eau (1) selon la revendication 9, **caractérisé en ce que** les segments de retenue (14) se chevauchent dans la zone des extrémités (18 ; 19).

11. Dispositif de traitement de l'eau (1) selon la revendication 9 ou 10, **caractérisé en ce que** chaque segment de retenue (14) est réalisé de manière plane et la première extrémité (18) de chaque segment de retenue (14) est décalée par rapport à la deuxième extrémité (19) de l'épaisseur de la deuxième extrémité (19) en angle droit par rapport à l'extension plane du segment de retenue (14).

12. Dispositif de traitement de l'eau (1) selon l'une quelconque des revendications précédentes, **caractérisé en ce qu'**un dispositif d'arrêt (11), lequel est réalisé pour la mise en prise amovible avec des rainures d'arrêt (24) disposées réparties dans la direction périphérique au niveau de la deuxième bride (13) ou première bride (12) correspondante, est disposé au niveau de la première bride (12) ou de la deuxième bride (13).

13. Dispositif de traitement de l'eau (1) selon la revendication 12, **caractérisé en ce que** le dispositif d'arrêt (11) est mobile entre une position de libération, dans laquelle le dispositif d'arrêt (11) n'est pas en prise avec les rainures d'arrêt (24), et une position d'arrêt, dans laquelle le dispositif d'arrêt (11) est en prise avec au moins une des rainures d'arrêt (24).

14. Dispositif de traitement de l'eau (1) selon l'une quelconque des revendications précédentes, **caractérisé en ce qu'**un joint (32 ; 33) est disposé entre des surfaces annulaires (30 ; 31) planes se faisant face l'une l'autre de la première bride (12) et de la deuxième bride (13) .

15. Dispositif de traitement de l'eau (1) selon l'une quelconque des revendications précédentes, **caractérisé en ce que** l'appareil de traitement de l'eau (2) est un filtre d'eau et/ou un point d'injection avec dispositif de dosage et/ou une installation d'adoucissement et/ou un compteur d'eau.
